# EUROPÄISCHE PATENTSCHRIFT

(11) **EP 1 833 338 B1**
(45) Veröffentlichungstag und Bekanntmachung des Hinweises auf die Patenterteilung: **25.02.2009**
(21) Anmeldenummer: 05807913.8
(22) Anmeldetag: 27.10.2005
(51) Int. Cl.: A47J 31/44, A47J 43/12

(54) **VORRICHTUNG ZUR ERZEUGUNG VON MILCHSCHAUM**
MILK FROTH PRODUCING DEVICE
DISPOSITIF POUR PRODUIRE DE LA MOUSSE DE LAIT

(30) Priorität: 29.12.2004 DE 102004063285
(43) Veröffentlichungstag der Anmeldung: 19.09.2007
(73) Patentinhaber: Melitta Haushaltsprodukte GmbH & Co. KG, 32427 Minden (DE)
(72) Erfinder: KRAMER, Siegmund, 83417 Kirchanschöring (DE); MEYER, Brigitte, 83339 Chieming (DE)
(74) Vertreter: Dantz, Jan Henning
(86) Internationale Anmeldenummer: PCT/EP2005/055601
(87) Internationale Veröffentlichungsnummer: WO 2006/072484

(56) Entgegenhaltungen:
- EP-A- 1 197 175
- EP-A- 1 597 992
- WO-A-90/10411
- DE-A1- 10 203 587

## Beschreibung

Die Erfindung betrifft eine Vorrichtung zur Erzeugung von Milchschaum. Diese Vorrichtung weist ein Dampfrohr auf, das mit einem ersten Ende an eine Dampferzeugungsquelle angeschlossen ist, von welcher das Dampfrohr mit Dampf gespeist wird, der entlang eines Dampfströmungsweges im Dampfrohr bis zu einer an einem zweiten Ende des Dampfrohrs angeordneten Dampfaustrittsöffnung strömt und dort aus dem Dampfrohr ausströmt. Außerdem weist die Vorrichtung ein außerhalb des Dampfrohrs im Bereich der Dampfaustrittsöffnung angeordnetes, rotierbar gelagertes Schäumorgan auf, welches durch den durch das Dampfrohr strömenden Dampf angetrieben wird.

Vorrichtungen zur Erzeugung von Milchschaum (kurz: Milchaufschäumer) werden z.B. an Kaffee- bzw. Espressomaschinen oder ähnlichen Geräten eingesetzt. Um ihre Primärfunktion, nämlich die Erzeugung von Brühgetränken, zu erfüllen, sind solche Brühgetränkemaschinen grundsätzlich mit einem Heißwassererzeuger, wie z.B. einem Wasserkessel oder Durchlauferhitzer ausgerüstet. Sofern die Maschine auch zur Bereitung von Cappuccino, Latte Machiato oder ähnlichen Getränken ausgerichtet sind, weisen sie eine zusätzliche Einrichtung zur Heißdampferzeugung auf. Üblicherweise befindet sich hierzu außenseitig eine Dampfdüse (oft Cappuccino-Düse genannt) mit einem Dampfrohr, welches an seinem freien Ende einen Dampfauslass aufweist. Der Benutzer taucht das Dampfrohr in ein mit kalter Milch gefülltes Kännchen ein und schäumt so mit Hilfe des Dampfs die Milch auf. Bei dem Aufschäumprozess spielen einige physikalische Aspekte eine entscheidende Rolle. So darf z.B. die Milch nicht zu heiß werden. Bei einer Temperatur von über ca. 65°C, beginnen die Eiweißmoleküle zu gerinnen, die dann keine Luftbläschen mehr festhalten können. Durch geschickte Bewegung sowie eine leicht schräge Lage der Düse und des Kännchens bildet sich in der Milch ein Wirbel, der Luft und Hitze gleichmäßig verteilt. Vorteilhafterweise sollte dabei der Benutzer den Behälter kreisend auf und ab bewegen bis sich ein relativ fester und stabiler Schaum gebildet hat. Ein Nachteil dieses klassischen Verfahrens besteht darin, dass viel Erfahrung erforderlich ist, um ein gutes Aufschäumergebnis zu erzielen.

Bei einer alternativen Methode, mit der auch ungeübte Personen guten Milchschaum erzeugen können, wird die Milch mechanisch aufgeschäumt. Es gibt auf dem Markt preiswerte Geräte, mit denen mittels eines kleinen elektromotorisch angetriebenen Propellers oder Schneebesens die Milch aufgeschäumt werden kann. Diese Rührelemente drehen sich relativ schnell und sorgen dafür, dass Luft in die Milch eingearbeitet wird. Dieses Verfahren hat zwei wesentliche Nachteile. Zum einen ist es notwendig, die Milch separat zu erhitzen, wodurch Zeitverluste entstehen. Zudem ist das Verfahren nicht so stilvoll für einen zuschauenden Gast.

Um die Nachteile der genannten Verfahren zu beseitigen, wird in der DE 100 50 719 A1 eine Vorrichtung der eingangs genannten Art zur Erzeugung von Milchschaum vorgeschlagen, das die beiden zuvor genannten Verfahren kombiniert. Die dort vorgeschlagene Vorrichtung weist ein Rohr auf, das mit einem ersten Ende an eine Dampferzeugungsquelle angeschlossen ist und das an seinem zweiten Ende eine Bohrung für den Dampfaustritt aufweist, und welches zusätzlich mit ersten Eintrittsöffnungen für den Eintritt von Luft oberhalb der Milchoberfläche und mit zweiten Eintrittsöffnungen für den Eintritt von Milch unterhalb der Milchoberfläche versehen ist. Im Inneren des Rohres wird dadurch ein Dampf-Luft-Milch-Gemisch erzeugt. Am freien Ende des Rohres ist eine drehbare Rührschaufel angeordnet, in deren Bereich das Dampf-Luft-Milch-Gemisch aus der Bohrung ausströmt. Die Rührschaufel wird durch die Dampfströmung im Rohr in Bewegung gesetzt. Diese Drehbewegung der Schaufel unterstützt zusammen mit dem gleichzeitig einströmenden Dampf-Luft-Milch-Gemisch die Bildung von Milchschaum. Nachteilig hierbei ist jedoch die aufwändige Reinigung der Düse. Dadurch, dass Milch in das Innere des Rohres eindringt, können geronnene Eiweißmoleküle im Dampfrohr verbleiben, und in verschiedenen Nischen des Rohraufbaues kleben. Die Reinigung muss nach jeder Benützung, oder zumindest täglich nach einer Benützung erfolgen. Dies macht es erforderlich, dass der untere Teil des Rohres, der mit der Milch in Berührung kommt, durch eine Steckkupplung von dem restlichen Teil des Rohres abnehmbar ist, um diesen Teil besser reinigen zu können. Die gesamte Konstruktion ist relativ kompliziert und teuer.

Die Kombination der beiden zuvor genannten Verfahren wird ebenfalls in der WO 9010411 und der EP 1 597 992 A1 beschrieben.

So offenbart die WO 9010411 eine Vorrichtung zum Aufschäumen und/oder Emulgieren bei gleich zeitigem Erhitzen einer Flüssigkeit, z.B. Milch, durch Einleiten von Heißdampf über ein an einen Heißdampferzeuger angeschlossenes Dampfrohr, an dessen freiem Ende mindestens eine Dampfaustrittsdüse angeordnet ist, die dadurch gekennzeichnet ist, dass der/den Dampfaustrittsdüse(n) mindestens ein mittels des aus der/den Dampfaustrittsdüse(n) austretenden Heißdampfes rotierbar angetriebenes Organ zugeordnet ist.

Die EP 1 597 992 A1, als Stand der Technik nach Art. 54(3) EPÜ offenbart eine Vorrichtung zum Aufschäumen einer Flüssigkeit, insbesondere Milch, mit einer Dampfzufuhr, über die eine in einem Gehäuse angeordnete Turbine antreibbar ist, und einer Luftzufuhr wobei die Turbine über eine Welle mit einem Quirl zum Rühren der Flüssigkeit gekoppelt ist, die dadurch gekennzeichnetist, dass ein Dampf-Luft-Gemisch über ein Rohr im Bereich des Quirls eingeleitet und mit der Flüssigkeit verwirbelt wird.

Es ist daher eine Aufgabe der vorliegenden Erfindung eine einfach und kostengünstig aufgebaute Vorrichtung zur Erzeugung von Milchschaum der eingangs genannten Art derart weiter zu entwickeln, so dass die o.g. Probleme vermieden werden.

Diese Aufgabe wird durch eine Vorrichtung zur Erzeugung von Milchschaum gemäß Anspruch 1 gelöst.

Erfindungsgemäß ist die Vorrichtung dabei derart ausgebildet, dass das Schäumorgan ein schneebesenartiges Element aufweist und das Dampfrohr entlang des Dampfströmungswegs allseits geschlossen ist. Da im Wesentlichen nur der heiße Dampf durch dass Innere des Rohres strömt, ist es möglich, zumindest größtenteils den gesamte Innenraum des Rohres einschließlich sämtlicher Poren im Material weitestgehend steril zu halten. Die Vorrichtung ist somit einfacher und kostengünstiger aufgebaut und relativ problemlos hygienisch sauber zu halten. Bei diesem Aufbau gerät der aus der Dampfaustrittsöffnung strömende Dampf direkt in das rotierende Schäumorgan, das dazu dient, die Milch aufzuquirlen. Somit wird einerseits die gleichmäßige Erhitzung der Milch und andererseits die Luftaufnahme durch das verwirbelte Milch-Dampf-Gemisch unterstützt. Daher sind Vorraussetzungen geschaffen, dass auch ungeübte Personen mit dieser Vorrichtung möglichst gute Aufschäumergebnisse erreichen.

Die abhängigen Ansprüche enthalten besonders vorteilhafte Ausgestaltungen und Weiterbildungen der Erfindung.

Das Schäumorgan kann grundsätzlich an einer beliebigen Stelle im Bereich der Dampfaustrittsöffnung angeordnet sein. Bei einem besonders bevorzugten Ausführungsbeispiel ist das Schäumorgan jedoch in einer Dampfausströmrichtung unmittelbar hinter der Dampfaustrittsöffnung angeordnet.

Vorteilhafterweise ist das Schäumorgan am Ende einer durch das Dampfrohr geführten Welle drehfest angeordnet, welche mit einem im Dampfrohr angeordneten, vom Dampf beaufschlagten Antriebselement gekoppelt ist. Dadurch wird ein Teil der Energie des Dampfstroms effektiv für die zur Erzeugung des Wirbels in der Milch durch das Schäumorgan benötigte Energie verwendet.

Am einfachsten erfolgt dabei die Koppelung zwischen dem Antriebselement und der Welle bzw. dem Schäumorgan so, dass beide koaxial in einem axialen Abstand zueinander an der Welle drehfest angeordnet sind.

Als Antriebselemente können im Allgemeinen beliebige Bewegungsumwandler wie z.B. Turbinen, Propeller und/oder Schnecken verwendet werden. Der Milchaufschäumer kann grundsätzlich auch mehrere Antriebselemente, insbesondere eine Kombination der genannten Antriebselemente, aufweisen. Durch geeignete Wahl der Form und der Abmessungen des Antriebselementes bzw. der Antriebselemente in Bezug auf die Abmessungen des Dampfrohres, die Intensität des Dampfstromes sowie die mechanische Belastung durch das Schäumorgan, kann die Energieübergabe an der Schnittstelle zwischen dem Dampfstrom und dem Antriebselement optimiert werden. Verschiedene detaillierte Konstruktionsmöglichkeiten sind dem Fachmann hinreichend bekannt und werden an dieser Stelle nicht weiter erörtert.

Die konkrete Ausgestaltung des Schäumorgans kann in verschiedenen Formen erfolgen. Bei einer Version ist das Schäumorgan ein Propeller. Der Vorteil dieser Variante besteht darin, dass ein Propeller einfach und kostengünstig z. B. aus Kunststoff im Spritzgussverfahren herstellbar ist.

Das Schäumorgan weist, anstelle eines Propellers, in einer bevorzugten Ausführung ein schneebesenartiges Element auf, mit dessen Hilfe besonders viel Luft in die Milch eingetragen wird. Bei einem besonders bevorzugten Ausführungsbeispiel ist das schneebesenartige Element in Form eines um eine mit der Achse der Antriebswelle koaxial angeordneten Achse rotierbaren Torus aus spiralförmigem Draht ausgebildet. Diese Ausführung hat durch die hohe Umfangsgeschwindigkeit der radial außenliegenden Drahtelemente eine sehr gute "Schlagwirkung". Außerdem weist diese Konstruktion weiche Kanten am Rande des drehenden Schäumorgans auf.

Im Übrigen kann der Milchaufschäumer auch mehrere Schäumorgane, insbesondere eine Kombination der genannten Schäumorgane, aufweisen.

Bevorzugt ist das Dampfrohr über eine drehbare Kupplung mit der Dampfquelle gekoppelt. Dadurch wird erreicht, dass das Rohr beim Milchaufschäumen in die optimale Position in Bezug auf das Milchgefäß gebracht werden kann. Das Dampfrohr lässt sich in eine Ruheposition schwenken, wenn es nicht verwendet wird.

Die Erfindung wird im Folgenden unter Hinweis auf die beigefügten Figuren anhand von Ausführungsbeispielen noch einmal näher erläutert. Es stellen dar:
- Figur 1: eine perspektivische Darstellung eines ersten Ausführungsbeispiels einer erfindungsgemäßen Vorrichtung zur Erzeugung von Milchschaum,
- Figur 2: eine perspektivische Darstellung eines zweiten Ausführungsbeispiels einer erfindungsgemäßen Vorrichtung zur Erzeugung von Milchschaum.

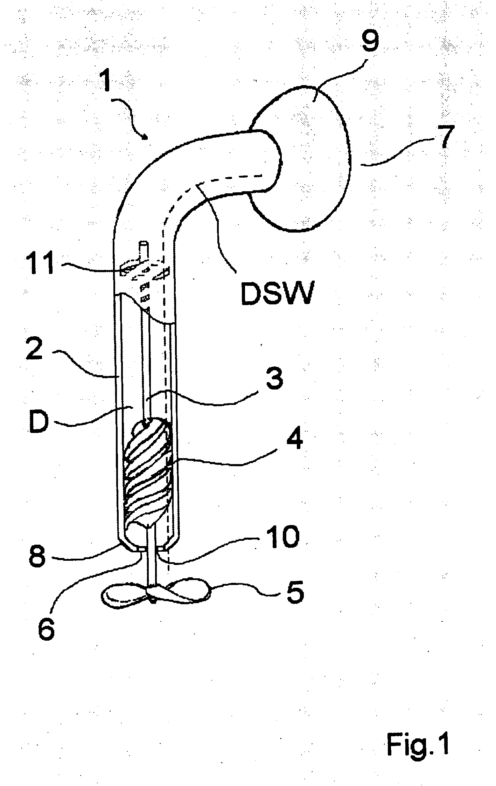

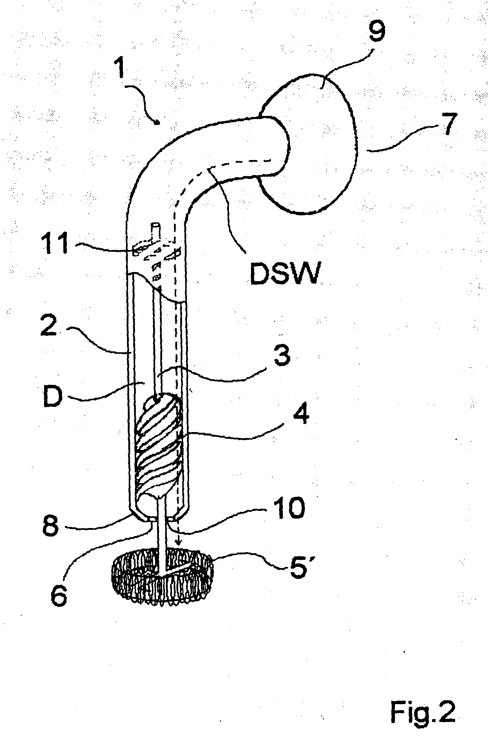

Die in den Figuren 1 und 2 dargestellten Vorrichtungen zur Erzeugung von Milchschaum 1 besitzen jeweils ein gebogenes Dampfrohr 2, das mit seinem ersten Ende 7 mit Hilfe einer Kupplung 9 mit einem Gehäuse bzw. im Inneren des Gehäuses mit der Dampferzeugungseinrichtung eines Brühgetränkeautomaten verbunden ist.

Der aus der Dampferzeugungseinrichtung ausströmende Dampf D strömt entlang eines Dampfströmungsweges DSW im Dampfrohres 2 bis zu einer am unteren d.h. freien Ende 8 des Dampfrohres 2 befindlichen Dampfaustrittsöffnung 6.

Im Inneren des Dampfrohres 2 verläuft koaxial zum Dampfrohr 2 eine Welle 3, die frei rotierbar gelagert ist und aus dem unteren, freien Ende 8 des Dampfrohrs 2 aus der Dampfaustrittsöffnung 6 hinausragt. Hierzu befindet sich innerhalb der Dampfaustrittsöffnung 6 eine untere Lagerung 10 für die Welle 3. Eine obere Lagerung 11 für die Welle 3 befindet sich im Inneren des Dampfrohres 2.

Im Inneren des Dampfrohres 2 ist auf der Welle 3 ein Antriebselement 4 in Form einer Schnecke drehfest angebracht.

Am äußeren, freien Ende der Welle 3 ist ein Schäumorgan 5, 5' drehfest angeordnet. Bei dem in Figur 1 dargestellten Ausführungsbeispiel handelt es sich um einen Propeller 5. Das in Figur 2 dargestellte Ausführungsbeispiel weist als Schäumorgan 5' ein schneebesenartiges Element 5' in Form eines um eine mit der Achse der Antriebswelle 3 koaxial angeordneten Achse rotierbaren Torus aus spiralförmigem Draht auf.

Die Funktionsweise beider Ausführungsbeispiele ist ausgesprochen einfach:

Zum Aufschäumen wird das Dampfrohr 2 wie bei einer herkömmlichen Cappuccinodüse knapp unterhalb der Oberfläche in die Milch eingetaucht. Der Dampf D strömt getrieben durch den Überdruck in der Dampfquelle entlang des Dampfströmungsweges DSW durch das Dampfrohr 2, tritt aus der Dampfaustrittsöffnung 6 aus und sorgt für ein Aufschäumen der Milch. Gleichzeitig wird durch den Dampf D das Antriebselement 4 in Drehung versetzt, wodurch sich über die fest verbundene Welle 3 auch das Schäumorgan 5, 5' zu drehen beginnt. Das sich relativ schnell drehende mechanische Schäumorgan 5, 5' bewirkt, das während des Aufschäumens mit dem Dampf D zusätzlich Luft eingebracht und somit ein gutes Aufschäumen erreicht wird. Zugleich wird die Milch durch das Durchrühren vor einer lokalen Überhitzung bewahrt, so dass eine schonende, gleichmäßige Erwärmung der Milch und damit ein Milchschaum in guter Qualität erzielt wird.

Es wird abschließend noch einmal darauf hingewiesen, dass es sich bei den vorhergehend genauer beschriebenen erfindungsgemäßen Vorrichtungen um Ausführungsbeispiele handelt, welche vom Fachmann in verschiedenster Weise modifiziert werden können, ohne den Bereich der Erfindung zu verlassen. Es wird der Vollständigkeit halber außerdem darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Vorrichtung zur Erzeugung von Milchschaum (1) mit einem Dampfrohr (2), das mit einem ersten Ende (7) an eine Dampferzeugungsquelle angeschlossen ist, von welcher das Dampfrohr (2) mit Dampf (D) gespeist wird, der entlang eines Dampfströmungswegs (DSW) im Dampfrohr (2) bis zu einer an einem zweiten Ende (8) des Dampfrohrs (2) angeordneten Dampfaustrittsöffnung (6) strömt und dort aus dem Dampfrohr (2) ausströmt, wobei das Dampfrohr (2) entlang des Dampfströmungsweges (DSW) allseits geschlossen ist, und mit einem außerhalb des Dampfrohrs (2) im Bereich der Dampfaustrittsöffnung (6) angeordneten, rotierbar gelagertem Schäumorgan (5, 5'), welches durch den durch das Dampfrohr (2) strömenden Dampf (D) angetrieben wird,
**dadurch gekennzeichnet, dass** das Schäumorgan (5') ein schneebesenartiges Element aufweist.

2. Vorrichtung zur Erzeugung von Milchschaum nach Anspruch 1, **dadurch gekennzeichnet, dass** das Schäumorgan (5, 5') am zweiten Ende (8) des Dampfrohrs (2) in einer Dampfausströmrichtung hinter der Dampfaustrittsöffnung (6) angeordnet ist.

3. Vorrichtung zur Erzeugung von Milchschaum nach Anspruch 2, **dadurch gekennzeichnet, dass** das Schäumorgan (5, 5') am Ende einer durch das Dampfrohr (2) geführten Welle (3) drehfest angeordnet ist, welche mit einem im Dampfrohr (2) angeordneten, vom Dampf (D) beaufschlagten Antriebselement (4) gekoppelt ist.

4. Vorrichtung zur Erzeugung von Milchschaum nach Anspruch 3, **dadurch gekennzeichnet, dass** das Antriebselement (4) in einem Abstand zum Schäumorgan (5, 5') im Inneren des Dampfrohres (2) angeordnet ist.

5. Vorrichtung zur Erzeugung von Milchschaum nach einem der Ansprüche 1 bis 4, **dadurch gekennzeichnet, dass** das schneebesenartige Element (5') in Form eines um eine mit der Achse der Antriebswelle koaxial angeordneten Achse rotierbaren Torus aus spiralförmigem Draht ausgebildet ist.

6. Vorrichtung zur Erzeugung von Milchschaum nach einem der Ansprüche 1 bis 5, **dadurch gekennzeichnet, dass** das Dampfrohr (2) über eine drehbare Kupplung (9) mit der Dampfquelle gekoppelt ist.

## Claims

1. Device for producing milk froth (1), comprising a steam tube (2) connected by a first end (7) with a steam producing source, from which the steam tube (2) is supplied with steam (D) which flows along a steam flow path (SFP) in the steam tube (2) to a steam outlet opening (6) arranged at a second end (8) of the steam tube (2) and there flows out of the steam tube (2), wherein the steam tube (2) is closed at all sides along the steam flow path (SFP), and a rotatably mounted frothing element (5, 5') which is arranged outside the steam tube (2) in the region of the steam outlet opening (6) and which is driven by the steam (D) flowing through the steam tube (2), **characterised in that** the frothing element (5') comprises a whisk element.

2. Device for producing milk froth according to claim 1, **characterised in that** the frothing element (5, 5') is arranged at the second end (8) of the steam tube (2) behind the steam outlet opening (6) in a steam outflow direction.

3. Device for producing milk froth according to claim 2, **characterised in that** the frothing element (5, 5') is arranged at the end of a shaft (3), which is led through the steam tube (2) and which is coupled with a drive element (4) arranged in the steam tube (2) and acted on by steam (D), to be secure against relative rotation.

4. Device for producing milk froth according to claim 3, **characterised in that** the drive element (4) is arranged in the interior of the steam tube (2) at a spacing from the frothing element (5, 5').

5. Device for producing milk froth according to any one of claims 1 to 4, **characterised in that** the whisk element (5') is constructed in the form of a torus, which is rotatable about an axis arranged coaxially with the axis of the drive shaft, of helical wire.

6. Device for producing milk froth according to any one of claims 1 to 5, **characterised in that** the steam tube is coupled with the steam source by way of a rotatable coupling (9).

## Revendications

1. Dispositif pour produire de la mousse de lait (1) comprenant un tube de vapeur (2) dont une première extrémité (7) est reliée à une source génératrice de vapeur qui alimente le tube (2) avec de la vapeur (D) passant selon un chemin de circulation (DSW) dans le tube (2) jusqu'à un orifice de sortie (6) prévu à la seconde extrémité (8) du tube (2) d'où elle s'échappe,
le tube (2) est fermé de tous côtés le long du chemin de circulation de vapeur (DSW) et
un organe mousseur (5, 5'), monté à rotation à l'extérieur du tube de vapeur (2) dans la zone de l'orifice de sortie de vapeur (6), est entrainé par la vapeur (D) traversant le tube (2),
**caractérisé en ce que**
l'organe mousseur (5') est un élément analogue à un fouet pour monter en neige.

2. Dispositif pour produire de la mousse de lait selon la revendication 1,
**caractérisé en ce que**
l'organe mousseur (5, 5') est prévu à la seconde extrémité (8) du tube de vapeur (2), derrière l'orifice de sortie de vapeur (6) dans le sens de sortie de celle-ci.

3. Dispositif selon la revendication 2,
**caractérisé en ce que**
l'organe mousseur (5, 5') est monté solidaire en rotation à une extrémité d'un arbre (3) traversant le tube de vapeur (2) et est couplée à un élément d'entraînement (4) sollicité par la vapeur (D), et logé dans le tube de vapeur (2).

4. Dispositif selon la revendication 3,
**caractérisé en ce que**
l'élément d'entraînement (4) se trouve à distance de l'organe mousseur (5, 5') à l'intérieur du tube de vapeur (2).

5. Dispositif selon l'une des revendications 1 à 4,
**caractérisé en ce que**
l'élément (5') analogue à un fouet pour monter en neige se présente sous la forme d'un tore en fils disposés en spirale, tournant autour d'un axe coaxial à l'axe d'entraînement.

6. Dispositif selon l'une des revendications 1 à 5,
**caractérisé en ce que**
le tube de vapeur (2) est couplé à la source de vapeur par l'intermédiaire d'un embrayage rotatif (9).
